# EUROPEAN PATENT APPLICATION

(11) **EP 3 561 285 A1**
(43) Date of publication of application: **30.10.2019**
(21) Application number: 18465521.5
(22) Date of filing: 25.04.2018
(51) Int. Cl.: F02M 26/69, F02M 26/68, F16K 1/44

(54) **EXHAUST-GAS VALVE FOR AN EXHAUST-GAS CONTROL DEVICE**

(71) Applicant: Continental Automotive GmbH, 30165 Hannover (DE)
(72) Inventor: Petca, Eduard Cornel, 300693 Timisoara (RO)

(57) **Abstract**

In the case of an exhaust-gas valve (3) for an exhaust-gas control device (2) of an internal combustion engine (1), one valve body (14) is manufactured in one piece with a shaft (16), and a second valve body (15) is sealingly fastened to the shaft (16). The two valve bodies (14, 15) can be easily aligned with respect to respective valve seats (12, 13) during the assembly process. By means of the fastening of the second valve body (15), the exhaust-gas valve (3) can be assembled in a particularly simple manner.

## Description

The invention relates to an exhaust-gas valve for an exhaust-gas control device of an internal combustion engine, having a housing, having a first valve body for controlling the flow to a first outlet duct, and having a second valve body for controlling the flow to a second outlet duct, having a common shaft for holding the two valve bodies, having valve seats respectively facing the valve bodies, and having an actuating device for driving the shaft.

Exhaust-gas control devices are commonly used in modern motor vehicles for conducting exhaust gas of the internal combustion engine to a bypass duct, to a catalytic converter, to an exhaust-gas recirculation arrangement or to a turbocharger, and are known from practice. The exhaust-gas valve known from practice has a central inlet duct and two outlet ducts. The outlet ducts are controlled by the valve bodies. The shaft is displaced by an actuating device, and the position of the two valve bodies relative to the valve seats is thus controlled. The arrangement of the valve bodies of the exhaust-gas valve on a common shaft however requires very narrow tolerances, because each of the valves faces a dedicated valve seat. In the exhaust-gas valve known from practice, both valve bodies are fastened to the shaft, which involves a high level of assembly effort.

The invention is based on the problem of further developing an exhaust-gas valve of the type mentioned in the introduction such that it is particularly easy to assemble.

Said problem is solved according to the invention in that the first valve body is manufactured in one piece with the shaft, and the second valve body is sealingly fastened to the shaft.

By means of this design, the shaft with the valve body arranged thereon can be installed until said valve body makes contact with the valve seat. The other valve body is subsequently moved against its valve seat and is sealingly connected to the shaft at this location. It is therefore necessary for only one of the valve bodies to be mounted on the shaft. In this way, the exhaust-gas valve can be assembled particularly easily.

In another advantageous refinement of the invention, the sealing fastening is particularly straightforward if the valve body sealingly fastened to the shaft is pressed onto and welded to the shaft. In this way, the fastening of the valve body permits particularly high accuracy, because firstly, in a preassembly stage, the two valve bodies can be pressed against the valve seats. The pressing of one valve body onto the shaft permits the compensation of tolerances. If, at the preassembly stage, both valve bodies are seated on the valve seats, it is possible for said one valve body to be welded to the shaft and thus fixed in its position. The sealing action is preferably generated by the pressing action.

In another advantageous refinement of the invention, it is conducive to a further reduction of the manufacturing costs of the exhaust-gas valve if the valve body sealingly fastened to the shaft is manufactured from sheet metal in a deep-drawing process.

In another advantageous refinement of the invention, it is conducive to a further reduction of the manufacturing costs of the exhaust-gas valve if the valve seat facing the valve body fastened to the shaft is of planar form.

In another advantageous refinement of the invention, the exhaust-gas valve is of particularly simple construction if the valve body sealingly fastened to the shaft has an encircling, axially extending collar.

In another advantageous refinement of the invention, the assembly of the shaft with the two valve bodies is particularly straightforward if the valve body sealingly fastened to the shaft has a larger diameter than the other valve body.

In another advantageous refinement of the invention, it is conducive to a further reduction of the manufacturing costs of the exhaust-gas valve if the first valve body is manufactured in one piece with the shaft. The shaft with said one valve body can thus be manufactured as a simple turned part.

In another advantageous refinement of the invention, it is conducive to a further simplification of the assembly of the exhaust-gas valve if the actuating device is arranged close to the valve body of large diameter.

In another advantageous refinement of the invention, the valve seats can be manufactured with particularly high accuracy if an insert fastened in the housing has the two valve seats. In this way, it would for example be possible for the housing to be manufactured by injection molding, and for the valve seats to be manufactured from high-strength steel.

The invention permits numerous embodiments. To further illustrate its basic principle, one of these embodiments is illustrated in the drawing and will be described below. In the drawing:
- figure 1: schematically shows an exhaust-gas control device of an internal combustion engine with an exhaustgas valve,
- figure 2: shows components of the exhaust-gas valve from figure 1 in the closed state on an enlarged scale and in a sectional illustration,
- figure 3: shows a shaft with two valve bodies before the assembly process, on an enlarged scale.

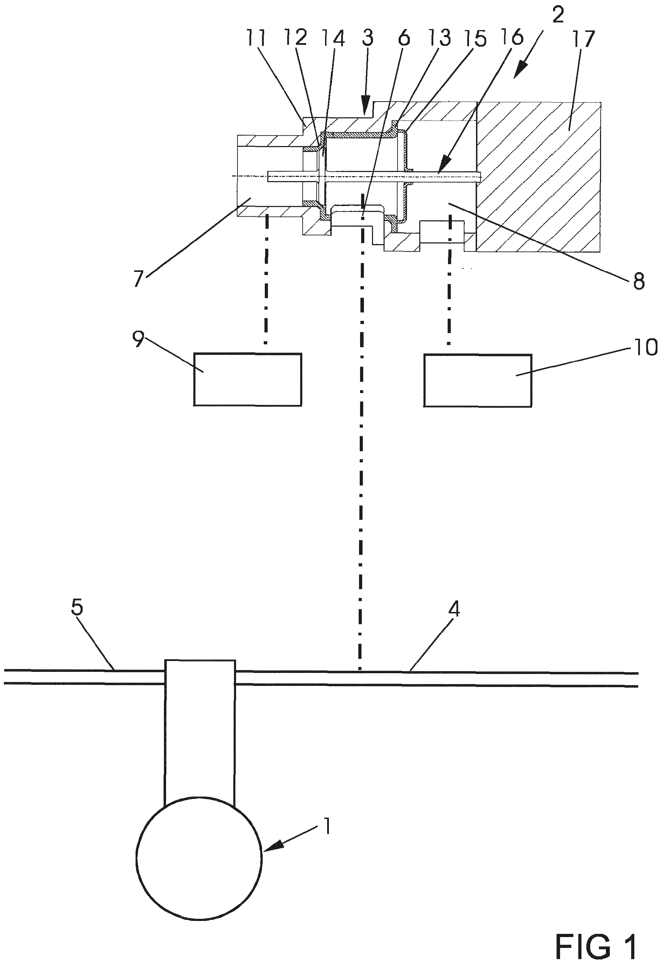

Figure 1 schematically shows an internal combustion engine 1 with an exhaust-gas control device 2 and an exhaust-gas valve 3. The internal combustion engine 1 has an exhaust-gas pipe 4 and an intake duct 5. An inlet duct 6 of the exhaust-gas valve 3 is connected to the exhaust-gas pipe 4. The exhaust-gas valve 3 has two outlet ducts 7, 8, via which partial streams of the exhaust gas of the internal combustion engine 1 are supplied to two schematically illustrated devices 9, 10. The devices 9, 10 may be a turbocharger, a bypass duct, an exhaust-gas recirculation arrangement or the like.

The exhaust-gas valve 3 has a housing 11 with two valve seats 12, 13 fastened therein. Two valve bodies 14, 15 face the valve seats 12, 13. The valve bodies 14, 15 are arranged on a common shaft 16. The shaft 16 can be displaced by an actuating device 17, and the valve bodies 14, 15 can thus be adjusted relative to the valve seats 12, 13. The actuating device 17 is formed as a housing cover of the housing 11. The valve bodies 14, 15 have different cross sections. The valve seat 13 situated closest to the actuating device 17 has a large cross section, such that the valve body 14 remote from the actuating device 17 can be led through during the assembly process.

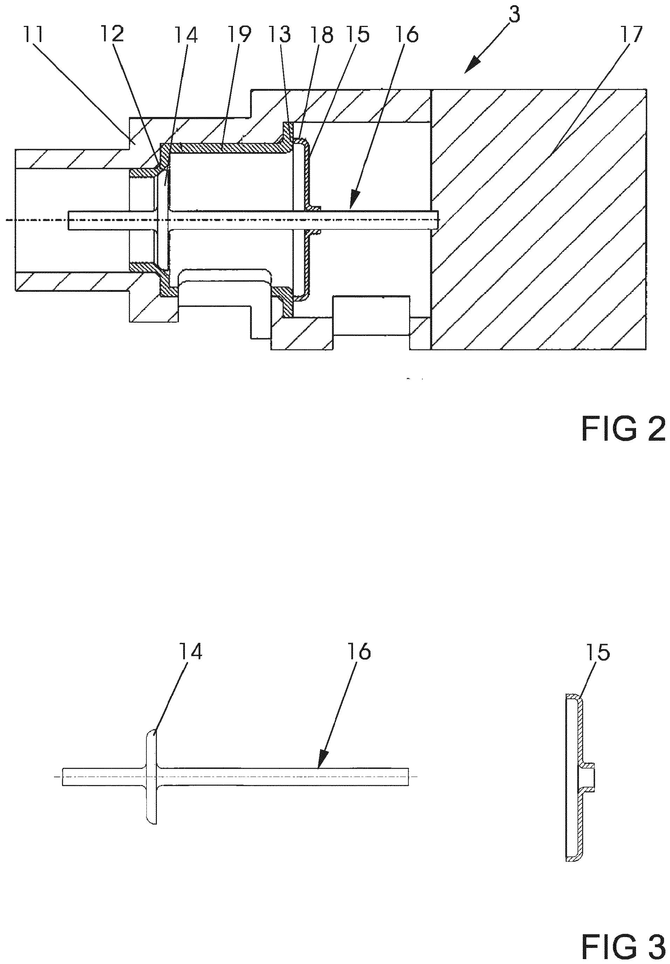

Figure 2 shows major components of the exhaust-gas valve 3 from figure 1 in an enlarged illustration, wherein the valve body 14 of small diameter is manufactured in one piece with the shaft 16. The valve body 15 of large diameter is manufactured from sheet metal and is sealingly fastened to the shaft 16. The valve body 15 manufactured from sheet metal has an encircling, axially extending collar 18. The valve seat 13 facing said valve body 18 is of planar form. The two valve seats 12, 13 are arranged on a common insert 19 fastened in the housing 11.

Figure 3 shows the two valve bodies 14, 15 with the shaft 16 before the assembly process, on an enlarged scale. For the assembly process, the shaft 16 is inserted into the insert 19 with the two valve seats 12, 13 as illustrated in figure 2, until the valve body 14 manufactured in one piece with the shaft 16 makes contact with the valve seat 12 of small diameter. The valve body 15 manufactured from sheet metal is subsequently mounted onto the shaft 16 until it makes contact with the valve seat 13 of large diameter. The valve body 15 manufactured from sheet metal is subsequently sealingly fastened to the shaft 16.

## Claims

1. An exhaust-gas valve (3) for an exhaust-gas control device (2) of an internal combustion engine (1), having a housing (11), having a first valve body (14) for controlling the flow to a first outlet duct (7), and having a second valve body (15) for controlling the flow to a second outlet duct (8), having a common shaft (16) for holding the two valve bodies (14, 15), having valve seats (12, 13) respectively facing the valve bodies (14, 15), and having an actuating device (17) for driving the shaft (16), **characterized in that** the first valve body (14) is manufactured in one piece with the shaft (16), and the second valve body (15) is sealingly fastened to the shaft (16).

2. The exhaust-gas valve as claimed in claim 1, **characterized in that** the valve body (15) sealingly fastened to the shaft (16) is pressed onto and welded to the shaft (16).

3. The exhaust-gas valve as claimed in claim 1 or 2, **characterized in that** the valve body (15) sealingly fastened to the shaft (16) is manufactured from sheet metal in a deep-drawing process.

4. The exhaust-gas valve as claimed in at least one of claims 1 to 3, **characterized in that** the valve seat (13) facing the valve body (15) fastened to the shaft (16) is of planar form.

5. The exhaust-gas valve as claimed in at least one of claims 1 to 4, **characterized in that** the valve body (15) sealingly fastened to the shaft (16) has an encircling, axially extending collar (18).

6. The exhaust-gas valve as claimed in at least one of claims 1 to 5, **characterized in that** the valve body (15) sealingly fastened to the shaft (16) has a larger diameter than the other valve body (14).

7. The exhaust-gas valve as claimed in at least one of claims 1 to 6, **characterized in that** the first valve body (14) is manufactured in one piece with the shaft (16) .

8. The exhaust-gas valve as claimed in at least one of claims 6 or 7, **characterized in that** the actuating device (17) is arranged close to the valve body (15) of large diameter.

9. The exhaust-gas valve as claimed in at least one of claims 1 to 8, **characterized in that** an insert (19) fastened in the housing (11) has the two valve seats (12, 13).
